# EUROPÄISCHE PATENTSCHRIFT

(11) **EP 1 836 030 B1**
(45) Veröffentlichungstag und Bekanntmachung des Hinweises auf die Patenterteilung: **18.06.2008**
(21) Anmeldenummer: 05822043.5
(22) Anmeldetag: 22.12.2005
(51) Int. Cl.: B26D 3/08, B60R 21/20, B29C 59/00, B26D 1/18

(54) **VORRICHTUNG ZUM TEILWEISEN DURCHTRENNEN VON NATÜRLICHEM ODER KÜNSTLICHEM LEDER**
DEVICE FOR THE PARTIAL SEPARATION OF NATRUAL OR ARTIFICIAL LEATHER
DISPOSITIF SERVANT A SECTIONNER PARTIELLEMENT DU CUIR NATUREL OU SYNTHETIQUE

(30) Priorität: 27.12.2004 DE 202004020202 U; 09.05.2005 DE 102005021235
(43) Veröffentlichungstag der Anmeldung: 26.09.2007
(73) Patentinhaber: FRIMO Group GmbH, 49504 Lotte (DE)
(72) Erfinder: WIENERS, Andreas, 41748 Viersen (DE); DIETZ, Holger, 47800 Krefeld (DE)
(74) Vertreter: Moldenhauer, Herbert
(86) Internationale Anmeldenummer: PCT/EP2005/013844
(87) Internationale Veröffentlichungsnummer: WO 2006/069726

(56) Entgegenhaltungen:
- EP-A- 1 162 044
- WO-A-00/21722
- DE-A1- 4 400 235
- DE-A1- 19 645 986
- DE-A1- 19 718 436
- DE-U1- 20 314 281
- PATENT ABSTRACTS OF JAPAN Bd. 2000, Nr. 15, 6. April 2001 (2001-04-06) & JP 2000 343486 A (CALSONIC KANSEI CORP), 12. Dezember 2000 (2000-12-12)

## Beschreibung

Die Erfindung betrifft eine Vorrichtung zum Schneiden von künstlichem oder natürlichem Leder, umfassend eine Auflage für das Leder, ein mit der Rückseite des Leders in Eingriff bringbares Kreismesser, das parallel zur Oberfläche der Auflage in Schnittrichtung (B) verschiebbar ist, einen Antrieb zum Verschieben des Messers, einen Sensor zur Bereitstellung eines den Abstand (A1) des Messers von der Auflage beschreibenden Sensorsignals, eine signallleitend mit dem Sensor verbundene Regelungseinrichtung zur Erzeugung eines Steuersignals beim Auftreten von Abweichungen des Sensorsignals von einem willkürlich eingebbaren Sollwert, um den Wert des Abstandes (A1) konstant zu halten und eine signalleitend mit der Regelungseinrichtung verbundene, durch das Steuersignal betätigbare Nachführeinrichtung für das Messer in einer gedachten Bewegungsebene, die sich senkrecht zur Oberfläche der Auflage (17) erstreckt,

### Stand der Technik:

Eine solche Vorrichtung nist aus der DE 19718436A1 bekannt. Sie dient dazu, das Schneidgut in seiner Gesamtheit zu durchtrennen. Ein nur teilweises Durchtrennen wird in der Druckschrift ncht erwähnt.

Vorrichtungen dieser Art, die mit einem Messer Aufreißlinien in die Abdeckung eines Airbags schneiden, sind bekannt. Beispielsweise befasst sich die DE203134281 U1 mit der Herstellung einer rückseitig angebrachten Aufreißlinie in der Abdeckung von Airbageinheiten. Die Aufreißlinie wird dabei mittels eines feststehenden Messers, das auch oszillierend sein kann, durch einen schneidenden Prozess erzeugt, wobei die Schnitttiefe und die Position des Messers relativ zu einer Schneidaufnahme gesteuert ist. Die bekannte Vorrichtung eignet sich nicht für die Herstellung von Aufreißlinien in natürlichem oder künstlichem Leder.

Bemühungen dieser Art richten sich auch auf Instrumententafeln mit einer Abdeckung aus natürlichem oder künstlichem Leder, die eine sichtbare Ziernaht als Airbag-Aufreißlinie aufweist.

Es besteht nun der Wunsch, derartige Ziernähte zu vermeiden und eine unsichtbare Unterbringungsmöglichkeit für funktionsfähige Airbags auch unter einer Abdeckung aus natürlichem oder künstlichem Leder zu erhalten. Eine solche Abdeckung soll sich bei einer Auslösung des Airbags zum Schutz von Passagieren zuverlässig und in definierter Weise öffnen.

Für die Herstellung unsichtbarer Airbags in Instrumententafeln sind bisher das Verbundschwächungsverfahren und das Folgeschwächungsverfahren bekannt.

Bei dem Verbundschwächungsverfahren wird ein Sandwich aus einer Abdeckfolie, einer Hinterschäumung und einem Träger mit einem gepulsten CO2-Laser gemeinsam perforiert, wohingegen beim Folgeschwächungsverfahren in einem ersten Schritt nur die Abdeckfolie und nach deren Hinterschäumung der darunter angeordnete Träger und gegebenenfalls der Schaum analog zur Schwächungslinie der Abdeckfolie ebenfalls geschwächt wird.

Während bei hinterschäumten Instrumententafeln mit einer Abdeckfolie aus reinem Kunststoff (z.B. aus PVC, TPO, PU, TPU) beide Verfahrensvarianten technisch sinnvoll anwendbar sind, ist ein Laserperforations- oder Schneidgerät bei natürlichem Leder nicht einsetzbar, weil die eiweißreichen Moleküle der durchtrennten Lederfasern bei einer Erwärmung durch den Laserstrahl denaturieren und verspröden, was die Haptik des Leders nachteilig verändert. Außerdem würde sich bei einer Laserbehandlung von Leder eine Geruchsbelästigung ergeben, die nicht hinnehmbar ist. Auch Kunstleder mit einem Gehalt von Fasern lässt sich auf diese Weise nicht in der erforderlichen Qualität mit einer unsichtbaren Schwächungsline versehen.

Auch die bisher bekannten Werkzeuge zur mechanischen Schwächung von Kunststoff-Folien, wie gezogene Skalpellklingen, Ultraschallschneidköpfe, mechanisch angetriebene Oszillationsköpfe oder auch das in der EP 1 161 362 offenbarte Schneidwerkzeug sind zum Schneiden natürlichen und künstlichen Leders nicht geeignet, weil die Materialien empfindlich in bezug auf Scher- und Druckbelastungen sind und bei einer solchen Bearbeitung in Hinblick auf das Aussehen Schaden nehmen können.

Aus der EP1162044A2 ist ein Verfahren und eine Vorrichtung zum Schneiden von leicht biegsamem, schlaffem Material bis auf eine vorbestimmte Schnittiefe bekannt, das sich eines rotierenden Kreismessers bedient. In Abhängigkeit von Dickenunterschieden in den verschiedenen Teilbereichen des Materials ergeben sich dabei unterschiedliche Restwandstärken und folglich unterschiedliche Aufreißfestigkeiten in den verschiedenen Teilbereichen.

### Darstellung der Erfindung:

Der Erfindung liegt die Aufgabe zu Grunde, eine Vorrichtung der eingangs genannten Art zu zeigen, die geruchfrei anzuwenden ist und die es erlaubt, unsichtbare Aufreißlinien in natürlichem oder künstlichem Leder zu erzeugen, ohne dass die Gefahr besteht, dass sich das Aussehen der Sichtseite, die Haptik oder die physikalischen Eigenschaften des Leders negativ verändern.

Diese Aufgabe wird erfindungsgemäß durch die im Anspruch 1 angegebenen Merkmale gelöst. Auf vorteilhafte Ausgestaltungen nehmen die Unteransprüche Bezug.

Die erfindungsgemäße Vorrichtung zum teilweisen Durchtrennen von natürlichem oder künstlichem Leder umfasst ein Kreismesser, das zum teilweisen Durchtrennen einer Airbagabdeckung aus künstlichem oder natürlichem Leder einen Durchmesser von 10-50 mm hat und das bei einer Umfangsgeschwindigkeit von 117 bis 330 m/min mit einer Vorschubgeschwindigkeit von max. 10 m/min in Schnittrichtung bewegbar ist. Das Kreismesser hat zweckmäßig einen Durchmesser von 15-30 mm und eine Drehzahl von 2.500 bis 3.500 U/min. Dies entspricht einer Umfangsgeschwindigkeit von ca. 117 bis 330 m/min, wobei ein Wert von ca. 200 m/min besonders gute Ergebnisse verspricht. Bezogen auf die verhältnismäßig geringe Vorschubgeschwindigkeit von max. 10 m/min resultiert dabei ein außerordentlich sauberer Schnitt und es entsteht so gut wie keine Wärme. Überhitzungsbedingte Versprödungen oder andere Schädigungen des natürlichen oder künstlichen Leders sind daher im Bereich des Schnittes nicht zu befürchten.

Der verhältnismäßig geringe Durchmesser des Kreismessers erlaubt es, Kurvenschnitte eines verhältnismäßig kleinen Radius zu erzeugen, ohne dass sich störende Verzerrungen der Flanken der durch den Schnitt erzeugten Nut ergeben.

Das Kreismesser kann dabei in einem definierten Abstand von der Auflage justierbar sein, was die Möglichkeit eröffnet, im einfachsten Fall das in einer Rotationsbewegung befindliche Kreismesser an der gewünschten Stelle in die Rückseite eines auf der Auflage befindlichen Leders eintauchen zu lassen und es anschließend in Richtung des Verlaufs der gewünschten Aufreißline relativ zu dem Leder vorwärts zu bewegen. Dabei wird eine saubere und auf der Sichtseite des Leders nicht wahrnehmbare Aufreißlinie erhalten.

Der Aufbau und die Funktion der Vorrichtung gehen aus von der Erkenntnis, dass natürliches Leder im Bereich der Sichtseite grundsätzlich immer empfindlich gegen Druck und Reibung ist sowie von unterschiedlicher Dicke und Dichte in den verschiedenen Teilbereichen eines jeden Stückes. Dies ist bedingt durch das unterschiedliche Alter, die Herkunft und den Ernährungszustand der Tiere, deren Häute zu dem Leder verarbeitet sind. Um eine industrielle Verwendung zu ermöglichen, ist es daher üblich, die Rückseite der Häute durch Abspalten und/oder Abfräsen soweit zu entfernen, dass ein Produkt von im wesentlichen einheitlicher Dicke erhalten wird. Dabei ergeben sich aber durch die unterschiedliche Dichte eines jeden Stücks im Rücken- und im Bauchbereich der verwendeten Häute immer noch Toleranzen von 0,2 mm und mehr, die zu groß sind, um bei einem in die Rückseite eindringenden Einschnitt von gleichmäßiger Tiefe ein einwandfreies Öffnen einer Airbagabdeckung nach dem Auslösen zu gewährleisten.

Bei künstlichem Leder sind ähnliche Gegebenheiten insbesondere dann vorhanden, wenn Fasern zumindest anteilig darin eingebettet sind und/oder der polymere Werkstoffkörper zumindest anteilig eine Schaumstruktur aufweist. Der Werkstoffkörper kann auch in eine eigenfeste Faserstruktur, beispielsweise in einen Vliesstoff- oder Gewebeträger anteilig in die Vorderseite oder ganz eingearbeitet sein oder auch nur die Sichtseite bedecken und beispielsweise aus PVC oder einem nach der Ein- oder Aufbringung vulkanisierten Latexschaum bestehen. Ferner kann eine solche Faserstruktur aus einem Doppelsteggewirk bestehen, bei dem zwei sich parallel zueinander erstreckende Gewirkeschichten durch sich senkrecht zu ihrer Längserstreckung erstreckende Fasern oder Fäden derart verbunden sind, dass sich bei geringem Gewicht eine verbesserte Elastizität der Gewirkeschichten in Bezug aufeinander ergibt. Ein solches Doppelsteggewirk kann auch nachträglich auf die Rückseite eines separat erzeugten Kunstleders aufkaschiert werden und mit diesem während der erfindungsgemäßen Bearbeitung eine Einheit bilden. Auch hierbei resultiert in aller Regel ein unsymmetrischer Querschnitt des Kunstleders und eine Dicke, die in den verschiedenen Teilbereichen nicht völlig ausgeglichen ist was durch eine künstlich erzeugte Narbung der Sichtseite nochmals verstärkt werden kann.

Erfindungsgemäß wird der Einschnitt daher derart ausgeführt, dass die Wurzel des Einschnittes nicht mehr in allen Teilbereichen denselben Abstand von der Rückseite sondern von der Vorderseite des Leders hat, u.z. einen gleichbleibenden Abstand von der Vorderseite in allen Teilbereichen, der je nach Airbag und der Art des natürlichen oder künstlichen Leders wahlweise 0,2 bis 0,7 mm betragen kann, vorzugsweise 0,3 bis 0,5 und insbesondere 0,4 mm. Ein einwandfreies Öffnen der Airbagabdeckungen ist dadurch immer gewährleistet. Dabei ist es von hervorzuhebender Bedeutung, dass beim Einschneiden der Aufreißlinie so gut wie keine Druck- und Schubkräfte auf das Leder ausgeübt werden. Das Aussehen der Sichtseite und die Haptik des Leders bleiben daher unverändert erhalten. Auch die physikalischen Eigenschaften von gegebenenfalls vorhandenen der Lederfasern oder Textilfasern im Bereich des Einschnittes sowie in dessen Umgebung erfahren keine nachteilige Veränderung und es ergibt sich auch bei der Bearbeitung von natürlichem Leder keine Geruchsbelästigung bei der Herstellung des Einschnittes.

Die Gesamtdicke der auf diesem Gebiet verwendeten, natürlichen Leder beträgt im Allgemeinen 1,5 mm. Abweichende Dicken stehen der Verwendung der erfindungsgemäßen Vorrichtung nicht entgegen.

Bei der beanspruchten Vorrichtung ist erfindungsgemäß vorgesehen:
a. ein Sensor zur Bereitstellung eines den Abstand des Kreismessers von der Auflage beschreibenden Sensorsignals,
b. eine signalleitend mit dem Sensor verbundene Regelungseinrichtung zur Erzeugung eines Steuerungssignals beim Auftreten von Abweichungen des Sensorsignals von einem willkürlich eingebbaren Sollwert
c. und eine signalleitend mit der Regelungseinrichtung verbundene, durch das Steuersignal betätigbare Nachführeinrichtung für das Kreismesser in einer gedachten Bewegungsebene, die sich senkrecht zur Oberfläche der Auflage erstreckt.

Die Justierung des Kreismessers in bezug auf die Auflage erfolgt bei einer solchen Bauform automatisch, was die Verwendung der Vorrichtung vereinfacht.

Der Sensor und das Kreismesser sind zweckmäßig einander unmittelbar benachbart zugeordnet. Hierdurch ist gewährleistet, dass die Eindringtiefe des Kreismessers immer den gewünschten Abstand von der Sichtseite erreicht. Eine sehr kleine Dimensionierung des Kreismessers und des Sensors begünstigt die Erfüllung dieser Forderung.

Der Sensor und das Kreismesser sind, bezogen auf die Auflage, zweckmäßig starr miteinander verbunden, beispielsweise durch eine Konsole, die einerseits die Lagerung des Kreismessers und andererseits diejenige des Sensors umfasst. Von dem Sensor erfasste Abweichungen des Sollabstandes von der Auflage können dadurch unmittelbar zu einer Neujustierung des Kreismessers nutzbar gemacht werden.

Die Aufreißlinien von Airbagabdeckungen sind immer so angebracht und ausgebildet, dass sie die Entstehung eines Fensters zulassen, durch das bei einer Betätigung der Airbag austreten kann. Diese Forderung lässt sich am besten durch eine Ausgestaltung erfüllen, bei der die Aufreißlinie ringförmig in sich geschlossen ausgebildet ist und beispielsweise die Form einer Ellipse, eines Kreises oder eines Rechteckes hat, dessen Quer- und Längsseiten scharfkantig auf einander stehen oder abgerundet ineinander übergehen.

Ferner kann die Aufreißlinie bei einer solchen Grundform an zumindest einer Stelle des Umfangs zumindest einmal in ihrem Verlauf in ihrer Tiefe vermindert oder so unterbrochen sein, dass eine scharnierartig wirkende Stelle erhalten wird, an der der von der Aufreißlinie umschlossene Teil bei einer Auslösung des Airbags festgehalten wird, um eine Verletzung der Fahrzeuginsassen durch unkontrolliert herumfliegende Bestandteile der Airbagabdeckung zu vermeiden. Bei dieser Stelle muss es sich nicht unbedingt um ein typisches Filmscharnier handeln, bei der die Aufreißlinie eine relativ verminderte Tiefe hat. Sie kann unter Ausnutzung der Flexibilität des natürlichen oder künstlichen Leders gegebenenfalls auch ganz weggelassen werden, sofern sicher gestellt ist, dass der initiale Aufreißprozess durch eine hinreichende Tiefe der Aufreißline an zumindest einer anderen Stelle sicher gestellt ist. Bei einer rechteckigen Grundform kann z.B. eine Längsseite gegebenenfalls in der Aufreißlinie ganz weggelassen sein, wenn die Aufreißlinie die übrigen Seiten hinreichend ausgebildet ist. Bei einer stumpf endenden Ausbildung ergibt sich, bedingt durch die Kreisform des Kreismessers, in Richtung des Endes eine allmählich abnehmende Tiefe, was einem ungewollten Weiterreißen über das Ende hinaus entgegensteht.

Ferner kann es vorgesehen sein, eine im wesentlichen kreisförmige oder rechteckige Grundform durch zumindest eine Sekante in mehrere Flügel zu unterteilen, die sich bei einer Auslösung des Airbags im Sinne der vorstehenden Darlegungen gemeinsam fensterartig öffnen und voneinander entfernen, ohne ganz vom Rand abgetrennt zu werden. Dabei kommt es somit aus Funktions- und Sicherheitsgründen darauf an, gezielt darauf zu achten, dass das Aufreißen der Aufreißlinie von einem willkürlich Bereich ausgehend, z.B. zwischen den die Segmente bildenden "Fensterflügeln", fortschreitend in Richtung des Randes erfolgt. Neben der Tiefe der Aufreißlinie in dem entsprechenden Bereich bzw. der Restdicke des Leders kann auch das Weiterreißverhalten des zur Anwendung gelangenden natürlichen oder künstlichen Leders hierfür maßgeblich sein. Die spezielle Ausgestaltung der Aufreißlinie hängt somit vom speziellen Anwendungsfall in weitem Umfang ab und lässt dem Designer viele Möglichkeiten offen.

Um eine Aufreißlinie zu erzeugen, kann das Kreismesser parallel zur Oberfläche der Auflage in Schnittrichtung (B) verschiebbar sein. Zweckmäßig ist es programmgesteuert in Schnittrichtung (B) verschiebbar, wobei die Schnittrichtung (B) Kurven mit willkürlich festlegbarem Kurvenradius, elliptische und /oder kreisförmig geschlossene Teilabschnitte umfassen kann.

Wenn Abrundungen im Verlauf der Aufreißlinie zur Anwendung gelangen, sollte der Radius einen Wert haben, der wenigstens 2 mal so groß ist wie der Radius des Kreismessers, um Verzerrungen der Flanken des von dem Kreismesser erzeugten Einschnittes zu vermeiden.

Die Auflage kann auch in zumindest einer Richtung in sich gewölbt sein, beispielsweise kreisförmig oder kugelig in zwei Richtungen, wobei konkave bzw. konvexe Ausgestaltungen möglich sind, ohne dass sich Probleme bei der Nachführung des Kreismessers ergeben. Der Wunsch nach derart gewölbten Lederabdeckungen ergibt sich aus der Forderungen nach einer geschmacklich ansprechenden und ergonomischen Gestaltung von Armaturentafeln und ist allgegenwärtig. Die Erfindung trägt dem Rechnung, in dem sie sicherstellt, dass die gewünschte Restdicke des Leders unterhalb des Schnittes auch bei einer solchen Ausbildung immer sehr präzise eingehalten wird. Eine Toleranz von plus / minus 0,05 mm ist problemlos erreichbar und genügt den Anforderungen an eine Airbagabdeckung.

Wenn die Auflage aus Metall besteht, besteht die Möglichkeit, als Sensor einen Induktionssensor zu verwenden. Derartige Sensoren sind besonders kostengünstig verfügbar und von großer Genauigkeit und Betriebssicherheit.

Das Kreismesser ist zweckmäßig in der Schnittrichtung rotierbar. Hierdurch werden die Schub- und Druckbeanspruchungen des Leders auf ein Minimum reduziert und Beeinträchtigungen des Aussehens besonders gut verhindert. Eine der Schnittrichtung entgegengesetzte Rotation ist gleichfalls möglich.

Die Dicke des Kreismessers beträgt 0,5 bis 10,0 mm, zweckmäßig 0,8 bis 1,2 mm. Sein Außenumfang wird bei einer Dicke von mehr als 1,5 mm zweckmäßig durch zwei einander durchschneidende Kegelflächen gebildet, die mit einander einen Schneidenwinkel von 3 bis 15° einschließen, vorzugsweise einen Schneidenwinkel von 4,5 bis 5,5°. Die beiden Kegelflächen sind der Rotationsachse des Kreismessers zweckmäßig spiegelbildlich zugeordnet. Bei dünneren Kreismessern genügt dagegen ein einseitiger Schliff der umfangseitigen Schneide.

Um das Arbeitsfeld frei von die Beschickung störenden Hilfseinrichtungen zu halten, hat es sich als zweckmäßig erwiesen, das Kreismesser auf der rotierbaren Spindel eines 90°-Winketgetriebes festzulegen, welches am Ende der Verlängerung einer Antriebswelle angeordnet ist. Der Antriebsmotor hat dadurch einen hinreichend großen Abstand von dem Arbeitsfeld.

Das Kreismesser ist im Normalfall der Oberfläche der Unterlage am Angriffspunkt unter einem rechten Winkel zugeordnet. Das Kreismesser und die Unterlage können jedoch abweichend hiervor, je nach Bedarf, auch einen spitzen Winkel miteinander einschließen, bezogen auf eine in der Spindelachse errichtete, gedachte Ebene. Die Erzeugung von verzerrungsfreien Kurvenschnitten lässt sich begünstigen, in dem der spitze Winkel und der Mittelpunkt des Kurvenradius dieselbe Richtung haben, sich das Kreismesser somit analog einem Zweiradfahrer gewissermaßen "in die Kurve" legt und das Kreismesser in Richtung des Mittelpunktes des zu erzeugenden, bogenförmigen Schnittes geneigt wird. Dies kann prozessgesteuert erfolgen. Die Schneidkante des rotierbaren Kreismessers kann somit unterschiedliche Stellungen zu dem zu schneidenden Leder annehmen, um unter Ausnutzung einer seitlichen Neigung Radien besser folgen zu können.

Das erfindungsgemäße Schneidwerkzeug hat den Vorteil, dass sich bei einer hohen Relativgeschwindigkeit des rotierbaren Kreismessers die Schnittkräfte, die auf das natürliche oder künstliche Leder einwirken, auf ein Minimum reduzieren. Auch wirkt die während des Schneidvorgangs auftretende Hauptkraftkomponente tangential auf das Leder und vermeidet daher Druckstellen, die das Aussehen der Sichtseite beeinträchtigen könnten.

Es ist von Vorteil, dass das Kreismesser in die Rückseite des Leders eindringt und dass durch das definierte Eindringen des rotierbaren Kreismessers in die Rückseite des Leders eine präzise definierte Restdicke des Leders unterhalb des Einschnittes erreicht wird. Die Eindringtiefe liegt bei üblichen Lederqualitäten von 1,5 mm Dicke bei etwa 1,0 mm, wobei es von hervorzuhebender Bedeutung ist, dass es die Erfindung gestattet, die Restdicke unterhalb der Aufreißlinie auf deren gesamter Länge von so weitgehend übereinstimmender Größe zu halten, dass sich ein exakt vorherbestimmbares Öffnungsverhalten in bezug auf die Auslösung von Airbags ergibt.

Natürliches Leder hat im Bereich der Sichtseite immer eine wesentlich dichtere Faserstruktur als im Bereich der Rückseite. Bei einer günstigen Wahl der Restdicke bleibt daher ein die Aufreißlinie bzw. Schnittlinie übergreifender Griff weitgehend unverändert erhalten, obwohl der Airbag in wünschenswerter Weise auslösbar ist. Die optimale Restdicke eines bestimmten Leders unter der Aufreißlinie hängt maßgeblich von der Qualität des natürlichen oder künstlichen Leders ab und ist im Einzelfalle durch Versuche zu ermitteln.

Eine Weiterbildung der Erfindung sieht vor, dass zur in-process-Regelung der Restwandstärke des eingeschnittenen Leders bei der Ausbildung von Aufreißlinien, von Sollbruch- und Trennungslinien, d.h. bei der Airbagschwächung, an einem Schneidkopf des Schneidwerkzeugs neben dessen Führungs- und Bewegungseinrichtung zur Messung des Abstands zu einer Auflage mindestens ein Abstandssensor vorgesehen ist, der ein Sensorsignal als Messgröße eines Regelkreises erzeugt, der den Abstand zwischen dem Abstandsensor und der Auflage erfasst und in einer Regeleinrichtung mit einem willkürlich einstellbaren Sollwert vergleicht, wobei ein Steuersignal erzeugt wird, das mittels einer Stelleinrichtung eine Nachjustierung der Schneidkante des rotierbaren Kreismessers, bezogen auf die Auflage, bewirkt. Als Stellglied kann eine robotergesteuerte Einrichtung zur Anwendung gelangen, die das rotierbare Kreismesser in eine ziehende, den Schnitt erzeugende Vorschubbewegung versetzt, wobei das Schneidwerkzeug mit seinem Regelkreis mindestens eine zusätzliche Relativbewegung ausführen kann.

Dabei kann der Abstandsensor als mindestens ein zylinderförmiger Körper ausgebildet sein, der über mindestens eine ein- oder mehrteilige Verbindung an den Schneidkopf angebunden ist.

Weiterhin kann vorgesehen sein, dass der Abstandssensor auf induktivem Funktionsprinzip beruht und dass der Induktivsensor des Abstandssensors so abgestimmt ist, dass der Abstand des Induktivsensors zu mindestens einem elektrisch leitenden Gegenstand, insbesondere zu der die Auflage bildenden Auflage, erfassbar ist.

Es ist von Vorteil, dass der Regelkreis als Lageregelkreis ausgebildet und /oder in die Vorrichtung integriert ist. Auch kann die Verbindung des Regelkreises zum Schneidwerkzeug dergestalt ausgebildet sein, dass die Messgröße, d.h. das Sensorsignal des Abstandssensors, verstärkt und an mindestens einer analogen Schnittstelle der Steuerung in den Regelkreis einspeisbar ist.

Ausführungsbeispiele der Erfindung werden nachstehend anhand der Zeichnungen näher erläutert. Es zeigen:
- Fig. 1: eine schematische Darstellung einer Vorrichtung mit einem rotierbaren Kreismesser gemäß der vorliegenden Erfindung;
- Fig. 2: in schematischer Teilschnittansicht einen Schneidkopf mit einem rotierbaren Kreismesser einer erfindungsgemäßen Vorrichtung, wobei am Schneidkopf ein Abstandssensor angeordnet ist;
- Fig. 3: Verschiedene Ausführungen des Verlaufs der Aufreißlinien von unterschiedlichen Airbagabdeckungen.

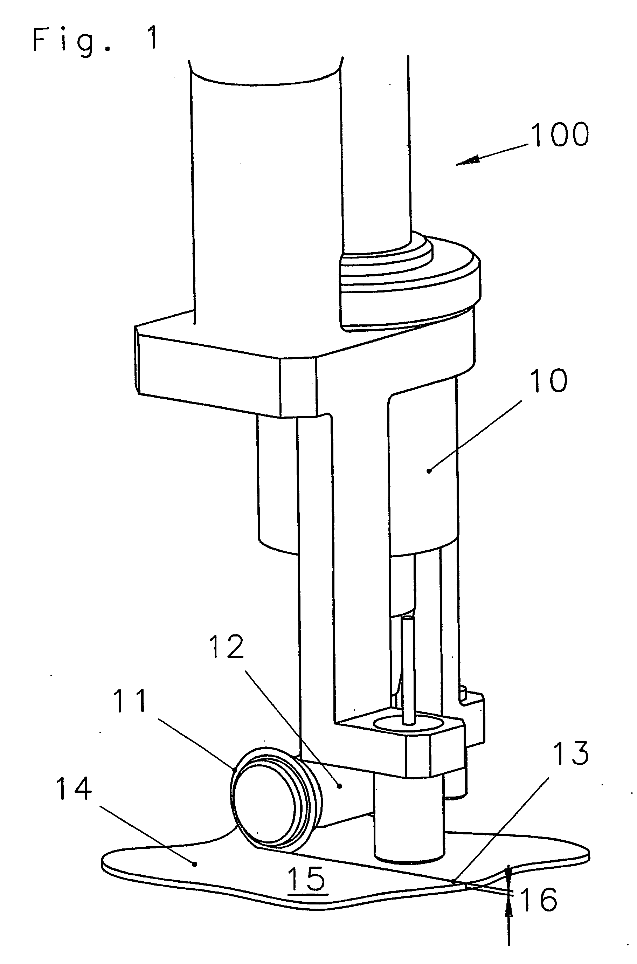

Fig. 1 zeigt eine Vorrichtung 100, die robotergesteuert sein kann und einen Schneidkopf 10 sowie ein rotierbares Kreismesser 11 aufweist. Die Vorrichtung 100 ist ferner mit einer rotierenden Spindel 12 mit 90°- Winkelgetriebe ausgestattet, an deren Ende das rotierbare Kreismesser 11 festgelegt ist. Das Kreismesser 11 besteht aus gehärtetem Werkzeugstahl. Eine Verwendung von Hartmetall zu seiner Herstellung ist möglich.

Für die Herstellung der Aufreißlinie 13 in dem Leder 14 schneidet das rotierbare Kreismesser 11 in die Rückseite 15 des Leders 14 eine Kerbe ein. Der dazu nötige Schnitt hat eine Eindringtiefe 16, die bei einer Dicke D des Leders 14 von etwa 1,5 mm etwa 1 mm beträgt. Die Drehzahl des Kreismessers 11 beträgt bei einem Durchmesser von 20 mm, gemessen an der umlaufenden Schnittkante, etwa 3.000 U/min. Dadurch werden die Schnitt- und Schubkräfte des rotierbaren Kreismessers 11, die auf das Leder 14 übertragen werden, auf ein Minimum reduziert. Auch wirkt die während des Schneidevorgangs auftretende Hauptkraftkomponente tangential auf das Leder 14 ein und vermeidet daher äußerlich erkennbare Druckstellen des Leders 14. Das rotierbare Kreismesser 11 ist bei einer Dicke von 1 mm im Bereich des Außenumfangs einseitig kegelig angeschliffen, wobei der Schneidenwinkel 5° beträgt. Des Weiteren ist das Kreismesser 11 bei dem in Fig. 1 gezeigten, geraden Schnittverlauf der Lederoberfläche senkrecht zugeordnet, d.h. die Spindel, auf der das Kreismesser 11 gelagert ist, erstreckt sich parallel zu der Oberfläche des Leders 14. Beim Schneiden von Radien kann es zweckmäßig sein, die Spindel in Richtung des Mittelpunktes des Kurvenradius nach innen zu neigen, um eine Beschädigung der Schnittflanken durch das Kreismesser 11 im auslaufenden Bereich des Umfangs zu vermeiden. Dabei ergibt sich ein räumlicher Versatz zwischen dem Eintauchpunkt des Kreismessers 11 in den Schnitt und der Lage der Schnittwurzel, was die Funktion als Airbagabdeckung nicht beeinträchtigt.

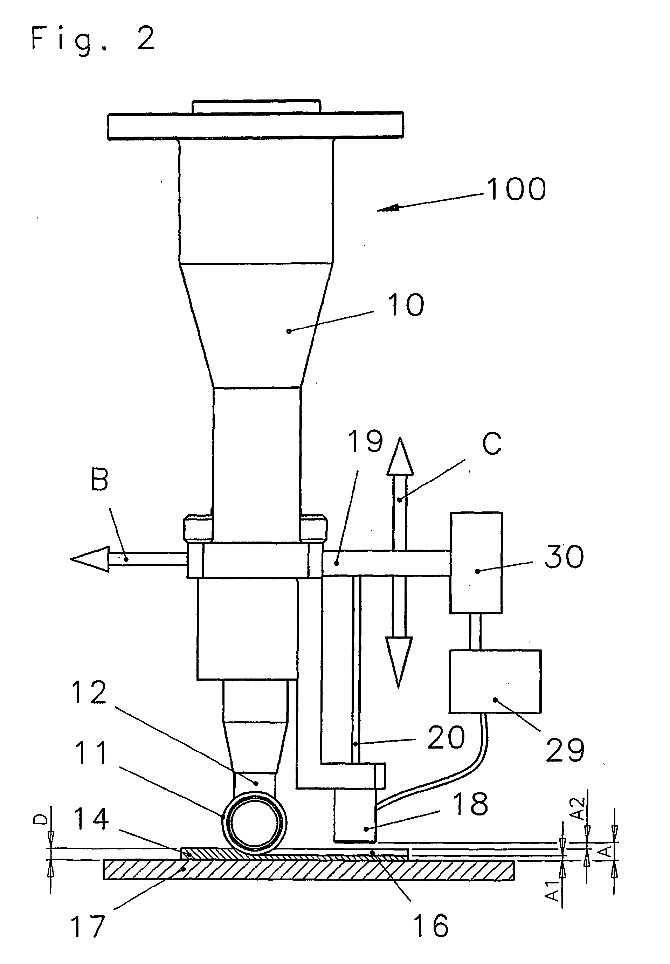

Wie aus Fig. 2 zu entnehmen, ist zur in-process-Regelung der Restwandstärke A1 des rückseitig eingeschnittenen Leders 14 an dem Schneidkopf 10 mit dem Kreismesser 11 mindestens ein Abstandssensor 18 starr befestigt. Der Abstandssensor 18 ist dadurch in die Relatiwerschiebungen des Kreismessers 11, bezogen auf die Auflage 17, unmittelbar mit einbezogen. Er hat einen Abstand von der Oberfläche des Leders 14. Das Sensorsignal des Abstandssensors 18 dient als Messgröße eines Regelkreises, bei dem der Abstand A zwischen dem Abstandssensor 18 und der Auflage 17 und damit zugleich der Abstand A1 zwischen dem rotierbaren Kreismesser 11 und der Auflage 17 eine Regelgröße bildet, die mit einem willkürlich einstellbaren Wert verglichen werden und dazu dienen kann, Abweichungen von einem einstellbaren SollWert zu vermeiden. Dazu wird das Sensorsignal in einer Regelungseinrichtung 29 in ein Steuersignal umgeformt, das eine Nachführeinrichtung 30 zugeführt wird und eine bedarfsweise erforderliche Korrektur der Zuordnung des Kreismessers 11 mit Hilfe der Nachführeinrichtung 30, bezogen auf die Lage die Auflage 17 bewirkt, um in allen Teilbereichen eine übereinstimmende Restwanddicke A1 des Leders 14 unterhalb des Kreismessers 11 zu erhalten. Der Abstand A2 des Sensors 18 ist geringfügig größer als die Schnitttiefe, um Scheuerbewegungen des Sensors 18 an dem Leder 14 zu vermeiden.

Die Relativbewegung des Kreismessers 11 in vertikaler Richtung C, bezogen auf die Auflage 17, ist durch die Vorwärtsbewegung B des Kreismessers 11 in Schnittrichtung überlagert. Sie folgt dem gewünschten Verlauf und ist bei einer Airbagabdeckung gewöhnlich ring- oder kreisförmig in sich geschlossen ausgeführt und kann durch Filmscharniere unterbrochen sein, bei denen die Einschnitttiefe so vermindert ist, dass der umschlossene Abschnitt bei der Auslösung eines Airbags festgehalten und am Wegfliegen gehindert wird, um Verletzungsgefahren vorzubeugen. Bei großen Ausführungen kann der von der äußeren Aufreißlinie umschlossene Bereich durch nach Art von Sekanten verteilte, weitere Aufreißlinien in Segmente unterteilt sein, die sich bei der Auslösung eines Airbags nach Art von Fensterflügeln vom Rande aus gemeinsam öffnen, um die Austrittsöffnung insgesamt freizugeben.

Der Abstandsensor 18 kann durch zumindest einen zylinderförmiger Körper gebildet sein, der über mindestens eine ein- oder mehrteilige Konsole 19, 20 an dem Schneidkopf 10 befestigt ist, wobei der Abstandssensor 18 bevorzugt ein induktives Funktionsprinzip verwirklicht. Der Abstandssensors 18 ist so abgestimmt, dass der Abstand zu mindestens einem elektrisch leitenden Gegenstand, insbesondere zur Auflage 17, sehr genau erfassbar ist. Der Regelkreis kann als Lageregelkreis ausgebildet und in die Vorrichtung 100 integriert sein, wobei die Verbindung des Regelkreises zum Vorrichtung 100 dergestalt ausgebildet ist, dass die Messgröße, d.h. das Sensorsignal des Abstandssensors 18, verstärkt und an mindestens einer analogen Schnittstelle der Steuerung in die Regelungseinrichtung 29 eingespeist wird. Das Kreismesser 11 wir dadurch bei der Erzeugung der Aufreißlinie in einem genau definierbaren Abstand über die Auflage 17 hinweggeführt. Die Restdicke des Leders unter der Aufreißlinie kann ist dadurch in allen Teilbereichen völlig übereinstimmend gestaltet und ein präzises Aufreißverhalten einer Airbagabdeckung gewährleistet werden.

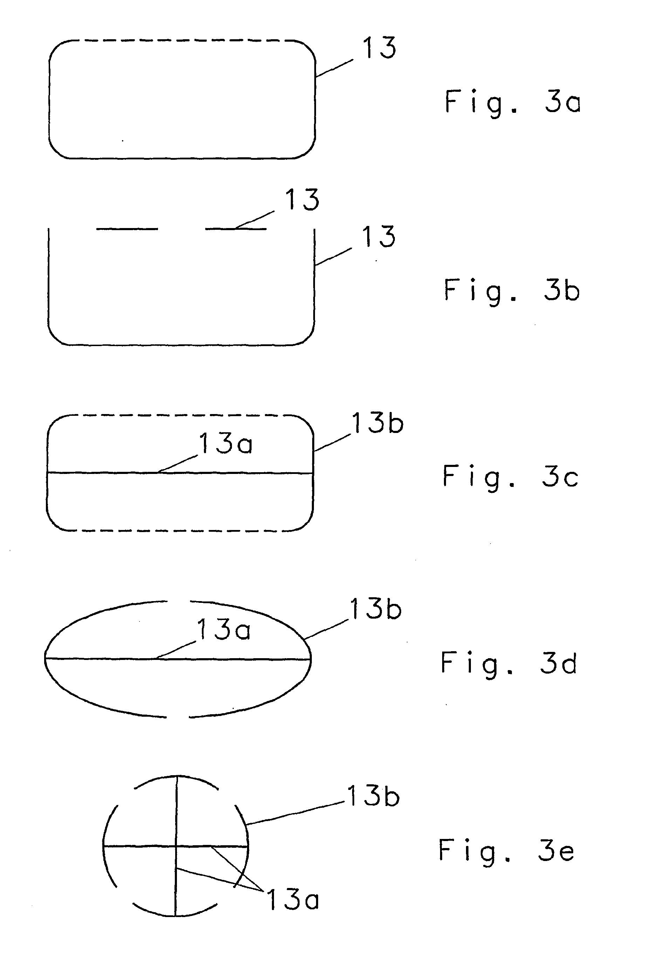

Fig. 3 a bis Fig. 3 e zeigen den Verlauf typischer Aufreißlinien 13 von unterschiedlich gestalteten Airbagabdeckungen. Dabei gelangt zum Teil eine im wesentlichen rechteckige Grundform zu Anwendung, wobei die Aufreißlinie 13 zur Erzeugung von Filmscharnieren teilweise an zumindest einer Längskante zumindest einmal unterbrochen ist, um den bei einer Auslösung aufklappenden Teil an einem unkontrollierten Wegfliegen zu hindern und Verletzungsgefahren zu vermeiden.

Ferner ist es bei drei Ausführungen vorgesehen, die rechteckige, elliptische oder runde Grundform der außenseitigen Aufreißlinie 13 b durch eine in Längsrichtung verlaufende, zusätzliche und zentral angeordnete Aufreißlinie 13 a in eine zweiflügelige Grundform zu unterteilen. Hierdurch lassen sich besonders große Airbags leichter unterbringen und funktionssicher Auslösen.

Ferner sind bei drei Ausführungen die Ecken der rechteckigen Grundform abgerundet ausgebildet, um den Verlauf der Aufreißlinien 13 bei der Betrachtung der Sichtseite leichter verstecken zu können, als dies bei einer scharfkantigen Ausbildung gewöhnlich gelingt. Außerdem ist die Erzeugung abgerundeter Ecken schneller möglich als bei einer scharfkantigen Ausbildung und bietet insoweit zusätzliche Vorteile in wirtschaftlicher Hinsicht.

## Patentansprüche

1. Vorrichtung zum Schneiden von künstlichem oder natürlichem Leder, umfassend eine Auflage (17) für das Leder, ein mit der Rückseite des Leders in Eingriff bringbares Kreismesser, das parallel zur Oberfläche der Auflage (17) in Schnittrichtung (B) verschiebbar ist, einen Antrieb zum Verschieben des Messers, einen Sensor (18) zur Bereitstellung eines den Abstand (A1) des Messers von der Auflage (17) beschreibenden Sensorsignals, eine signallleitend mit dem Sensor (18) verbundene Regelungseinrichtung (29) zur Erzeugung eines Steuersignals beim Auftreten von Abweichungen des Sensorsignals von einem willkürlich eingebbaren Sollwert, um den Wert des Abstandes (A1) konstant zu halten und eine signalleitend mit der Regelungseinrichtung verbundene, durch das Steuersignal betätigbare Nachführeinrichtung (30) für das Messer (11) in einer gedachten Bewegungsebene, die sich senkrecht zur Oberfläche der Auflage (17) erstreckt, **dadurch gekennzeichnet, dass** das Kreismesser (11) zum teilweisen Durchtrennen einer Airbagabdeckung aus künstlichem oder natürlichem Leder einen Durchmesser von 10-50 mm hat, angetrieben ist und bei einer Umfangsgeschwindigkeit von 117 bis 330 m/min mit einer Vorschubgeschwindigkeit von max. 10 m/min in Schnittrichtung bewegbar ist.

2. Vorrichtung nach Anspruch 1, **dadurch gekennzeichnet, dass** das Kreismesser (11) programmgesteuert in Schnittrichtung (B) verschiebbar ist.

3. Vorrichtung nach Ansprüche 2, **dadurch gekennzeichnet, dass** die Schnittrichtung (B) Kurven mit willkürlich festlegbarem Kurvenradius, elliptische und /oder kreisförmig geschlossene Teilabschnitte umfasst.

4. Vorrichtung nach Anspruch 3, **dadurch gekennzeichnet, dass** die Schnittrichtung (B) einen Kurvenradius hat, der wenigstens 2 mal so groß ist wie der Radius des Kreismessers (11).

5. Vorrichtung nach einem der Ansprüche 1 bis 4, dass die Auflage (17) in zumindest einer Richtung in sich gewölbt ist.

6. Vorrichtung nach einem der Ansprüche 1 bis 5, **dadurch gekennzeichnet, dass** die Auflage (17) aus Metall besteht und dass der Sensor (18) ein Induktionssensor ist.

7. Vorrichtung nach einem der Ansprüche 1 bis 6, **dadurch gekennzeichnet, dass** das Kreismesser (11) einen Durchmesser von 15-30 mm und eine Drehzahl von mindestens 1000 U/min hat.

8. Vorrichtung nach einem der Ansprüche 1 bis 7, **dadurch gekennzeichnet, dass** das Kreismesser (11) in der Schnittrichtung rotierbar ist.

9. Vorrichtung nach einem der Ansprüche 1 bis 8, **dadurch gekennzeichnet, dass** das Kreismesser (11) eine Dicke von 0,5 bis 10 mm hat.

10. Vorrichtung nach Anspruch 9, **dadurch gekennzeichnet, dass** das Kreismesser (11) eine Dicke von 0,8 bis 1,5 mm hat.

11. Vorrichtung nach einem der Ansprüche 1 bis 10, **dadurch gekennzeichnet, dass** das Kreismesser (11) einen Außenumfang hat, der durch eine einseitig angeschliffene Kegelfläche gebildet ist.

12. Vorrichtung nach einem der Ansprüche 1 bis 11, **dadurch gekennzeichnet, dass** das Kreismesser (11) einen Außenumfang hat, der durch zwei einander durchschneidende Kegelflächen gebildet ist, und dass die Kegelflächen mit einander einen Schneidenwinkel von 3 bis 7° einschließen.

13. Vorrichtung nach Anspruch 12, **dadurch gekennzeichnet, dass** die beiden Kegelflächen der Rotationsachse des Kreismessers (11) spiegelbildlich zugeordnet sind.

14. Vorrichtung nach einem der Ansprüche 1 bis 13, **dadurch gekennzeichnet, dass** das Kreismesser (11) auf der rotierbaren Spindel (12) eines 90°-Winketgetriebes (12) festgelegt ist.

15. Vorrichtung nach einem der Ansprüche 1 bis 18, **dadurch gekennzeichnet, dass** das Kreismesser (11) und die Unterlage, in einer gedachten, in der Spindelachse errichteten Ebene, betrachtet, einen spitzen Winkel mit einander einschließen.

## Claims

1. A device for cutting artificial or natural leather, comprising a support (17) for the leather, a circular knife which can be brought into engagement with the rear side of the leather and can be displaced parallel to the surface of the support (17) in the cutting direction (B), a drive for displacing the knife, a sensor (18) for providing a sensor signal which describes the distance (A1) between the knife and the support (17), a regulating device (29) which is connected to the sensor (18) in a signal-conducting manner and is for generating a control signal when deviations occur between the sensor signal and a desired value which can be input in an arbitrary manner, in order to keep the value of the distance (A1) constant, and a tracking device (30) for the knife (11), which is connected to the regulating device in a signal-conducting manner and can be actuated by the control signal, in an imaginary movement plane which extends perpendicular to the surface of the support (17), **characterized in that** the circular knife (11) for partially severing an airbag cover of artificial or natural leather has a diameter of 10 - 50 mm, is driven, and can be moved at a circumferential speed of from 117 to 330 m/min with an advance speed of at most 10 m/min in the cutting direction.

2. A device according to claim 1, **characterized in that** the circular knife (11) can be displaced in the cutting direction (B) in program-controlled fashion.

3. A device according to claim 2, **characterized in that** the cutting direction (B) includes curves with a curve radius which can be defined in an arbitrary manner, elliptical and/or circularly closed segments.

4. A device according to claim 3, **characterized in that** the cutting direction (B) has a curve radius which is at least twice as large as the radius of the circular knife (11).

5. A device according to any one of claims 1 to 4, **characterized in that** the support (17) is intrinsically curved in at least one direction.

6. A device according to any one of claims 1 to 5, **characterized in that** the support (17) comprises metal, and **in that** the sensor (18) is an induction sensor.

7. A device according to any one of claims 1 to 6, **characterized in that** the circular knife (11) has a diameter of 15 - 30 mm and a rotational speed of at least 1000 rpm.

8. A device according to any onE of claims 1 to 7, **characterized in that** the circular knife (11) can be rotated in the cutting direction.

9. A device according to any one of claims 1 to 8, **characterized in that** the circular knife (11) has a thickness of from 0.5 to 10 mm.

10. A device according to claim 9, **characterized in that** the circular knife (11) has a thickness of from 0.8 to 1.5 mm.

11. A device according to any one of claims 1 to 10, **characterized in that** the circular knife (11) has an outer circumference which is formed by a conical surface that is partially ground on one side.

12. A device according to any one of claims 1 to 11, **characterized in that** the circular knife (11) has an outer circumference which is formed by two intersecting conical surfaces, and **in that** the conical surfaces enclose a cutting edge angle of from 3 to 7°.

13. A device according to claim 12, **characterized in that** the two conical surfaces are assigned to the axis of rotation of the circular knife (11) in a mirror-inverted manner.

14. A device according to any one of claims 1 to 13, **characterized in that** the circular knife (11) is secured on the rotatable spindle (12) of a 90° angular gear (12).

15. A device according to any one of claims 1 to 14, **characterized in that** the circular knife (11) and the base enclose an acute angle, when considered on an imaginary plane set up in the spindle axis.

## Revendications

1. Dispositif pour couper du cuir artificiel ou naturel, comprenant un support (17) pour le cuir, un couteau circulaire pouvant être amené en prise avec le côté arrière du cuir, qui peut être déplacé parallèlement à la surface du support (17) dans le sens de coupe (B), un entraînement pour le déplacement du couteau, un capteur (18) pour la préparation d'un signal de capteur décrivant la distance (A1) du couteau au support (17), un dispositif de réglage (29), relié par conduction de signal au capteur (18), destiné à générer un signal de commande en cas d'apparition d'écarts entre le signal de capteur et une valeur de consigne pouvant être introduite arbitrairement, afin de maintenir constante la valeur de la distance (A1) et un dispositif d'asservissement (30) pouvant être relié par conduction de signal au dispositif de réglage et pouvant être actionné par le signal de commande, pour le couteau (11) dans un plan de déplacement imaginaire, qui s'étend perpendiculairement à la surface du support (17), **caractérisé en ce que** le couteau circulaire (11) destiné à la séparation partielle d'un revêtement d'airbag à base de cuir synthétique ou naturel a un diamètre de 10 à 50 mm, est entraîné et peut être déplacé dans le sens de coupe avec une vitesse périphérique de 117 à 330 m/min avec une vitesse d'avancement maximale de 10 m/min.

2. Dispositif selon la revendication 1, **caractérisé en ce que** le couteau circulaire (11) peut être déplacé commandé par programme dans le sens de coupe (B).

3. Dispositif selon la revendication 2, **caractérisé en ce que** le sens de coupe (B) comporte des courbes avec un rayon de courbe pouvant être fixé de façon arbitraire, des tronçons elliptiques et/ou fermés en forme de cercle.

4. Dispositif selon la revendication 3, **caractérisé en ce que** le sens de coupe (B) a un rayon de courbe qui fait au moins deux fois le rayon du couteau circulaire (11).

5. Dispositif selon l'une quelconque des revendications 1 à 4, **caractérisé en ce que** le support (17) est courbé sur lui-même dans au moins une direction.

6. Dispositif selon l'une quelconque des revendications 1 à 5, **caractérisé en ce que** le support (17) est en métal et **en ce que** le capteur (18) est un capteur à induction.

7. Dispositif selon l'une quelconque des revendications 1 à 6, **caractérisé en ce que** le couteau circulaire (11) a un diamètre de 15 à 30 mm et un régime d'au moins 1.000 t/min.

8. Dispositif selon l'une quelconque des revendications 1 à 7, **caractérisé en ce que** le couteau circulaire (11) peut tourner dans le sens de coupe.

9. Dispositif selon l'une quelconque des revendications 1 à 8, **caractérisé en ce que** le couteau circulaire (11) a une épaisseur de 0,5 à 10 mm.

10. Dispositif selon la revendication 9, **caractérisé en ce que** le couteau circulaire (11) a une épaisseur de 0,8 à 1,5 mm.

11. Dispositif selon l'une quelconque des revendications 1 à 10, **caractérisé en ce que** le couteau circulaire (11) a un diamètre extérieur qui est formé par une surface conique affûtée d'un côté.

12. Dispositif selon l'une quelconque des revendications 1 à 11, **caractérisé en ce que** le couteau circulaire (11) a un périmètre extérieur qui est formé par deux surfaces coniques qui se coupent et **en ce que** les surfaces coniques formant l'une avec l'autre un angle tranchant de 3 à 7°.

13. Dispositif selon la revendication 12, **caractérisé en ce que** les deux surfaces coniques sont attribuées de façon symétrique à l'axe de rotation du couteau circulaire (11).

14. Dispositif selon l'une quelconque des revendications 1 à 13, **caractérisé en ce que** le couteau circulaire (11) est fixé sur la broche (12) rotative d'un engrenage angulaire de 90° (12).

15. Dispositif selon l'une quelconque des revendications 1 à 14, **caractérisé en ce que** le couteau circulaire (11) et le support, vus dans un plan imaginaire et construit dans l'axe de broche, forment entre eux un angle aigu.
